# EUROPÄISCHE PATENTSCHRIFT

(11) **EP 2 658 420 B1**
(45) Veröffentlichungstag und Bekanntmachung des Hinweises auf die Patenterteilung: **18.02.2015**
(21) Anmeldenummer: 11815665.2
(22) Anmeldetag: 30.12.2011
(51) Int. Cl.: A47J 31/44

(54) **VERFAHREN ZUM AUTOMATISCHEN ERZEUGEN VON MILCHSCHAUM**
METHOD FOR AUTOMATICALLY PRODUCING MILK FROTH
PROCÉDÉ DE PRODUCTION AUTOMATIQUE DE MOUSSE DE LAIT

(30) Priorität: 30.12.2010 EP 10016188
(43) Veröffentlichungstag der Anmeldung: 06.11.2013
(73) Patentinhaber: JURA Elektroapparate AG, 4626 Niederbuchsiten (CH)
(72) Erfinder: REYHANLOO, Shahryar, CH-6405 Immensee (CH)
(74) Vertreter: EGLI-EUROPEAN PATENT ATTORNEYS
(86) Internationale Anmeldenummer: PCT/CH2011/000310
(87) Internationale Veröffentlichungsnummer: WO 2012/088616

(56) Entgegenhaltungen:
- EP-A1- 2 229 851
- WO-A1-00/16674
- DE-C1- 3 902 281
- US-A1- 2007 187 421
- Anonymous: "Making flavored lattes", home-barista.com: Tips and techniques , 11. Dezember 2006 (2006-12-11), Seiten 1-3, XP002639707, Gefunden im Internet: URL:http://www.home-barista.com/tips/makin g-flavored-lattes-t2505.html [gefunden am 2011-05-31]
- Anonymous: "A newbie question about italian coffee tradition and sugar?", home-barista.com: Coffees , 5. August 2006 (2006-08-05), Seiten 1-4, XP002639708, Gefunden im Internet: URL:http://www.home-barista.com/coffees/ne wbie-question-about-italian-coffee-traditi on-and-sugar-t2028.html [gefunden am 2011-05-31]

## Beschreibung

Die Erfindung betrifft ein Verfahren zum automatischen Erzeugen von Milchschaum in einer Milchschäumvorrichtung sowie eine Milchschäumvorrichtung zum automatischen Erzeugen von Milchschaum.

Aus der Technik sind automatische Milchschäumvorrichtungen bekannt, welche beispielsweise an Kaffeevollautomaten angeordnet sein können, wobei der Milchschaum für Kaffeegetränke wie beispielsweise Cappuccino automatisch mittels einer solchen bekannten Milchschäumvorrichtung erzeugt und an einem Ende eines Milchschaum-Ausgabekanals ausgegeben wird. In derartigen Milchschäumvorrichtungen wird zum Ansaugen und Weitertransportieren sowie zum notwendigen Verwirbeln der Milch der Venturi-Effekt ausgenutzt, wobei in einem Bereich der bekannten Milchschäumvorrichtung heisser Dampf, in der Regel Wasserdampf, eingeleitet wird, sodass dieser Dampf an einem Milcheinlasskanal vorbeiströmt und dabei einen Unterdruck erzeugt, wobei infolge des Unterdrucks jeweils Milch durch den Milcheinlasskanal aus einem Vorratsbehälter angesaugt wird.

Diese mittels des Dampfes angesaugte Milch durchströmt im Inneren einer solchen bekannten Milchschäumvorrichtung einen Hohlraum und wird dort verwirbelt. Zusätzlich ist es bekannt, bei derartigen bekannten Milchschäumvorrichtungen einen Lufteinlasskanal vorzusehen, wodurch beim Vorbeiströmen des Wasserdampfes zusätzlich zur Milch auch Luft angesaugt wird, welche zusammen mit der Milch in dem Hohlraum verwirbelt wird. Aus dem Hohlraum gelangt die Milch bzw. das Milch-Dampf-Gemisch, ggf. angereichert mit Luft zu einem Milch-Dampf-Luft-Gemisch, in eine sogenannte Emulsionskammer, in welcher der Aufschäumvorgang abgeschlossen und das verwirbelte Gemisch abgebremst wird. An die Emulsionskammer schliesst sich ein Ausgabekanal für das erzeugte Gemisch an, welcher aus der Milchschäumvorrichtung herausführt und in der Regel in einer Milchschaum-Ausgabeeinrichtung des Kaffeevollautomaten mündet.

Ausgehend von der geschilderten Problemstellung liegt der vorliegenden Erfindung die Aufgabe zugrunde, ein Verfahren zum automatischen Erzeugen von Milchschaum anzugeben, welches einen organoleptisch und geschmacklich optimierten Milchschaum liefert, welcher insbesondere fein, dicht, sämig und geschmacklich ansprechend ist.

Diese Aufgabe wird durch ein Verfahren mit den Merkmalen des Patentanspruchs 1 gelöst.

Das Verfahren zum automatischen Erzeugen von Milchschaum beruht auf einer Milchschäumvorrichtung, welche wenigstens einen Hohlraum, einen Dampfeinlasskanal zum Einleiten von Dampf in den Hohlraum, einen Milcheinlasskanal zum Einleiten von Milch in den Hohlraum, einen Lufteinlasskanal zum Einleiten von Luft in den Hohlraum und einen Auslasskanal zur Abgabe von Milchschaum aus der Milchschäumvorrichtung und eine zwischen dem Hohlraum und dem Auslasskanal angeordnete Emulsionskammer aufweist, wobei der Dampfeinlasskanal, der Milcheinlasskanal, der Lufteinlasskanal, die Emulsionskammer und der Auslasskanal jeweils mit dem Hohlraum direkt oder indirekt verbunden sind und durch Einleiten von Dampf in den Hohlraum ein Milch-Luft-Dampfgemisch im Hohlraum erzeugbar und in die Emulsionskammer einleitbar ist. Das Verfahren weist zumindest die folgenden Verfahrensschritte auf:
(i) Einleiten von Dampf in den Dampfeinlasskanal, um Milch und Luft in den Hohlraum strömen zu lassen und zu einem Milch-Luft-Dampf-Gemisch zu verwirbeln, und (ii) Ausgabe des Milch-Luft-Dampf-Gemischs aus der Emulsionskammer in den Auslasskanal.

Gemäss der Erfindung wird ein in fester Form vorliegendes Süssungsmittel in die Emulsionskammer eingebracht, wobei das Süssungsmittel als ein zu einem Block geformter Körper ausgebildet ist und dieser Körper in der Emulsionskammer angeordnet wird, bevor das Einleiten von Dampf in den Dampfeinlasskanal erfolgt, sodass das Süssungsmittel von dem Milch-Luft-Dampf-Gemisch umströmt und in dem Milch-Luft-Dampf-Gemisch aufgelöst wird.

Das erfindungsgemässe Verfahren weist wesentliche Vorteile gegenüber dem Stand der Technik auf. Zum einen wirkt sich das Beimengen des Süssungsmittels, vorzugsweise Zucker, in einem unmittelbar von dem Milch-Luft-Dampf-Gemisch während des Milchschäumvorganges durchströmten Bereich im Wesentlichen gleichmässig auf die gesamte, die Milchschäumvorrichtung durchströmende Milchmenge bzw. das die Milchschäumvorrichtung durchströmende Milch-Luft-Dampf-Gemisch aus, wodurch ein gesüsster Milchschaum entsteht, welcher überraschenderweise (im Vergleich zu Milchschaum, dem beim Aufschäumen der jeweiligen Milch kein Süssungsmittel beigemengt wurde) eine feinere und dichtere Struktur aufweist und sämiger ist, was sich positiv auf den Geschmack und die Organoleptik während des Verzehrs eines mit einem solchen Milchschaum zubereiteten Kaffeegetränkes auswirkt.

Des Weiteren ist so sichergestellt, dass die geschmacksverbessernden, süssenden Eigenschaften des Süssungsmittels sehr gleichmässig bezogen auf die gesamte die Milchschäumvorrichtung durchströmte Milch verteilt sind, sodass der gesamte Milchschaum süss schmeckt.

Nicht zuletzt wird durch das Einbringen des Süssungsmittels bereits innerhalb der Milchschäumvorrichtung erreicht, dass bereits gesüsster Milchschaum aus der Milchschäumvorrichtung beim Durchführen des erfindungsgemässen Verfahrens ausgegeben wird, was ein Nachsüssen des mit einem solchen Milchschaum versehenen Kaffeegetränkes verzichtbar macht.

Dadurch, dass die Milchschäumvorrichtung einen Lufteinlasskanal aufweist, welcher indirekt oder direkt mit dem Hohlraum verbunden ist und in welchen Luft einströmt, wird erreicht, dass diese Luft zusammen mit der Milch verwirbelt wird, wodurch die Schaumstruktur des erzeugten Milchschaums je nach beigemengter Luftmenge beispielsweise durch Vergrössern oder Verkleinern des Lufteinlasskanalquerschnittes variiert werden kann. Durch einen solchen Lufteinlasskanal, der vorzugsweise variabel gestaltet ist, kann insbesondere beim Hinzumischen von Luft zu der in den Hohlraum einströmenden (ggf. kalten) Milch der Vorteil erreicht werden, dass aus der Milchschäumvorrichtung erwärmte Milch in Kombination mit einem besonders feinporigen Milchschaum ausgegeben wird, wobei der Milchschaum die erfindungsgemässe vorteilhafte feine und dichte Schaumstruktur aufweist und zusätzlich sowohl die erwärmte ausgegebene Milch als auch der Milchschaum bereits beim Ausgeben aus der Milchschäumvorrichtung gesüsst sind.

Da die Emulsionskammer zwischen dem Hohlraum und dem Auslasskanal der Milchschäumvorrichtung angeordnet ist, strömt das Milch-Luft-Dampf-Gemisch - ausgehend vom Hohlraum-durch die Emulsionskammer zum Auslasskanal, sodass das Milch-Luft-Dampf-Gemisch die Emulsionskammer jeweils (strömungsabwärts des Hohlraums und strömungsaufwärts des Auslasskanals) durchströmt, wobei dann bei der Durchführung des erfindungsgemässen Verfahrens das Süssungsmittel in die Emulsionskammer eingebracht wird. Dies ist insbesondere dann von Vorteil, wenn die Emulsionskammer von aussen zugänglich ausgebildet ist und ein manuelles Einbringen des Süssungsmittels in die Emulsionskammer möglich ist.

Es kann vorgesehen sein, Süssungsmittel in fester Form, beispielsweise in Form eines zu einem Block geformten Körpers (z.B. als Zuckerstück und vorzugsweise in Form eines zylinder-, würfel- oder kugelförmigen Zuckerstücks) zu verwenden. Ein festes Süssungsmittel hat den Vorteil der besseren Handhabbarkeit. Das feste Süssungsmittelkann dabei insbesondere derart geformt sein, dass es zumindest vom Milch-Luft-Dampf-Gemisch umströmt wird oder auch durchströmt wird. So kann es beispielsweise vorgesehen sein, das feste Süssungsmittel als Zuckerstück (z.B. als Würfelzucker) auszubilden, welches ein Loch aufweist, durch welches das Milch-Luft-Dampf-Gemisch hindurchströmen kann. Durch eine derartige Formgebung wird dann erreicht, dass die Oberfläche eines solchen Zuckerstücks vergrössert ist, so dass sich wegen der vergrösserten Oberfläche eines solchen Zuckerstücks eine bessere bzw. schnellere Löslichkeit des Zuckerstücks in dem das jeweilige Loch durchströmenden und/oder das jeweilige Zuckerstück umströmenden Milch-Luft-Dampf-Gemisch ergibt.

Des Weiteren kann es bei dem erfindungsgemässen Verfahren vorgesehen sein, das Süssungsmittel in die Emulsionskammer der Milchschäumvorrichtung einzubringen, bevor der Dampf in den Dampfeinlasskanal eingeleitet wird. Hierdurch wird sichergestellt, dass das Süssungsmittel sofort zur Durchmischung zur Verfügung steht, sobald das Milch-Dampf-Luft-Gemisch den Bereich erreicht, in welchem das Süssungsmittel platziert ist. Damit kann insbesondere erreicht werden, dass das Süssungsmittel eine besonders lange Zeit auf die in der Milchschäumvorrichtung verwirbelte Milch einwirken kann und der jeweils erzeugte Milchschaum besonders intensiv und gleichmässig gesüsst wird.

Eine Vorrichtung zum automatischen Erzeugen von Milchschaum (im Folgenden "Milchschäumvorrichtung") gemäss dem erfindungsgemässen Verfahren weist wenigstens einen Hohlraum, einen Dampfeinlasskanal zum Einleiten von Dampf in den Hohlraum, einen Milcheinlasskanal zum Einleiten von Milch in den Hohlraum, einen Lufteinlasskanal zum Einleiten von Luft in den Hohlraum und einen Auslasskanal zur Abgabe von Milchschaum aus der Milchschäumvorrichtung auf. Der Dampfeinlasskanal, der Milcheinlasskanal, der Lufteinlasskanal und der Auslasskanal sind dabei jeweils direkt oder indirekt mit dem Hohlraum verbunden, sodass durch den Dampfeinlasskanal eingeleiteter Dampf, durch den Milcheinlasskanal eingeleitete Milch und durch den Lufteinlasskanal eingeleitete Luft in dem Hohlraum zu einem Milch-Luft-Dampf-Gemisch verwirbelbar sind und das Milch-Luft-Dampf-Gemisch durch den Auslasskanal aus der Milchschäumvorrichtung abgebbar ist. Weiterhin weist eine derartige Milchschäumvorrichtung eine Einrichtung zum Einbringen von Süssungsmittel in einen Bereich der Milchschäumvorrichtung auf, welcher während eines Aufschäumvorganges zumindest von dem Milch-Luft-Dampf-Gemisch durchströmt wird.

Eine derartige an einer solchen Milchschäumvorrichtung vorgesehene Einrichtung zum Einbringen von Süssungsmittel ermöglicht es in vorteilhafter Weise, durch automatisches Erzeugen von Milchschaum während eines Aufschäumvorganges gleichmässig gesüssten und in seiner Schaumstruktur besonders feinen bzw. feinporigen, dichten und sämigen Milchschaum zu erzeugen.

Die Milchschäumvorrichtung weist eine zwischen dem Hohlraum und dem Auslasskanal angeordnete Emulsionskammer auf, wobei die Emulsionskammer derart mit dem Hohlraum und dem Auslasskanal verbunden ist, dass zumindest ein Bereich der Emulsionskammer während eines Aufschäumvorganges von dem Milch-Luft-Dampf-Gemisch durchströmbar ist, wobei die Einrichtung zum Einbringen von Süssungsmittel dazu ausgebildet ist, das Süssungsmittel in den vom dem Milch-Luft-Dampf-Gemisch durchströmbaren Bereich der Emulsionskammer einzubringen. Dabei wird die Emulsionskammer während eines Aufschäumvorganges von dem Milch-Luft-Dampf-Gemisch durchströmt. Eine derartige Einrichtung zum Einbringen von Süssungsmittel in die Emulsionskammer der Milchschäumvorrichtung kann beispielsweise eine Verschwenkung der Emulsionskammer erlauben, sodass die Emulsionskammer oder zumindest ein Teilbereich der Emulsionskammer von aussen zugänglich wird und festes und/oder flüssiges Süssungsmittel in die Emulsionskammer eingebracht werden kann. Weiterhin ist es möglich, eine derartige Einrichtung zum Einbringen von Süssungsmittel in die Emulsionskammer als Öffnung zu dem Emulsionskammer-Innenraum auszubilden, wobei durch die Öffnung Süssungsmittel in den Innenraum der Emulsionskammer eingebracht werden kann und wobei die Öffnung nach dem Einbringen des Süssungsmittels in Vorbereitung eines Aufschäumvorganges verschlossen werden kann. Im Folgenden werden bevorzugte Ausführungsbeispiele einer Milchschäumvorrichtung insbesondere zum Einsatz in einem erfindungsgemässen Verfahren zum automatischen Erzeugen von Milchschaum anhand einer Zeichnung näher erläutert.

Es zeigen:
- Fig. 1: eine Schnittansicht auf ein erstes Ausführungsbeispiel einer Milchschäumvorrichtung;
- Fig. 2: eine Schnittansicht auf ein zweites Ausführungsbeispiel einer Milchschäumvorrichtung; und
- Fig. 3: eine Schnittansicht auf ein drittes Ausführungsbeispiel einer Milchschäumvorrichtung.

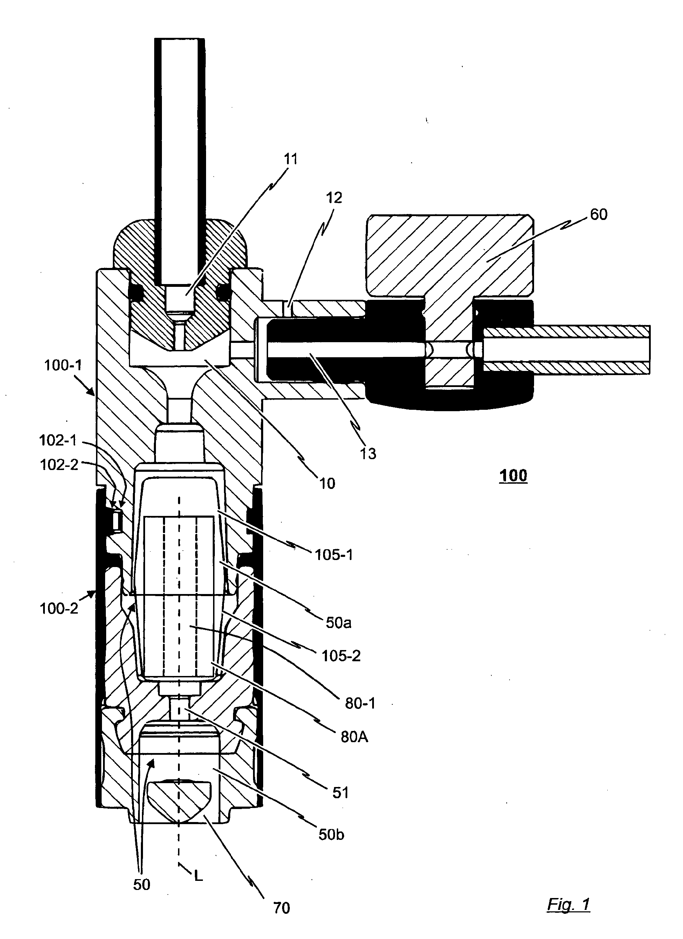

Fig. 1 zeigt eine Schnittansicht auf ein erstes Ausführungsbeispiel einer Milchschäumvorrichtung 100, insbesondere zum Durchführen eines erfindungsgemässen Verfahrens zum automatischen Erzeugen von Milchschaum. Die Milchschäumvorrichtung 100 weist gemäss Fig. 1 einen Hohlraum 10 auf, in welchen durch einen Dampfeinlasskanal 11 Dampf, insbesondere Wasserdampf, eingeleitet werden kann, so dass dieser den Hohlraum 10 durchströmt. Ferner unmittelbar mit dem Hohlraum 10 verbunden und in Fig. 1 vom Hohlraum 10 rechts liegend dargestellt ist ein weiterer Kanal, welcher sich in einen Milcheinlasskanal 13 und einen Lufteinlasskanal 12 verzweigt. Der Lufteinlasskanal 12 erlaubt ein Einströmen von Luft in den Hohlraum 10, während der Milcheinlasskanal 13 an seinem vom Hohlraum 10 abgewandten Ende in einen in Fig. 1 nicht gezeigten Vorratsbehälter für Milch mündet.

Des Weiteren kann ein Regulierventil 60 vorgesehen sein, welches zum Zwecke der Dosierung der Milch den Milcheinlasskanal 13 teilweise verschliesst. Wird Dampf in den Dampfeinlasskanal 11 eingeleitet, entsteht durch das Vorbeiströmen am Mündungsbereich des Kanalsystems mit dem Lufteinlasskanal 12 und dem Milcheinlasskanal 13 aufgrund des Venturi-Effekts ein Unterdruck, wodurch Milch und Luft angesaugt und in den Hohlraum 10 eingeleitet werden. Im Hohlraum 10 kommt es dann zu einer Durchwirbelung dieses eingeleiteten und angesaugten Gemisches aus Milch, Luft und Dampf ("Milch-Luft-Dampf-Gemisch"), was zur Entstehung des Milchschaumes beiträgt. Anschliessend gelangt das Milch-Luft-Dampf-Gemisch in eine Emulsionskammer 50, in welcher die turbulente Strömung, welche noch im Hohlraum 10 vorliegt, abgebremst und das Milch-Luft-Dampf-Gemisch homogenisiert wird, sodass in der Emulsionskammer 50 eine Emulsion aus Milch(-tropfen), Dampf (-blasen) und/oder Luft (-blasen) entsteht, welche den Milchschaum bildet.

Im gezeigten ersten Ausführungsbeispiel gemäss Fig. 1 findet in der Emulsionskammer 50 die weitere Durchmischung der angesaugten Milch mit dem Dampf und der ebenfalls angesaugten Luft statt, wodurch der Milchschaum entsteht bzw. in seiner Struktur beeinflusst bzw. verdichtet wird.

Wie Fig. 1 andeutet, ist die Emulsionskammer 50 im vorliegenden Beispiel in zwei Teilräume - den ersten Teilraum 50a und den zweiten Teilraum 50b - unterteilt, wobei die Teilräume 50a und 50b durch einen Verbindungskanal 51 verbunden sind. Der Teilraum 50a ist dabei derart mit dem Hohlraum 10 verbunden, dass das jeweils im Hohlraum 10 erzeugte Gemisch aus Milch, Dampf und Luft in den ersten Teilraum 50a der Emulsionskammer 50 eingeleitet wird und anschliessend ausschliesslich über den Verbindungskanal 51 in den zweiten Teilraum 50b der Emulsionskammer 50 gelangen kann. Der Verbindungskanal 51 hat - wie Fig. 1 andeutetet - eine Querschnittsfläche, welche wesentlich (z.B. um mehr als einen Faktor 2) geringer ist als eine Querschnittsfläche des ersten Teilraums 50a. Dadurch, dass der Verbindungskanal 51 demnach relativ eng ist im Vergleich zum Teilraum 50a und zum Teilraum 50b, wird erreicht, dass sich das jeweils in den ersten Teilraum 50a der Emulsionskammer 50 eingeleitete Gemisch aus Milch, Dampf und Luft am Verbindungskanal 51 zunächst staut, bevor es in den zweiten Teilraum 50b der Emulsionskammer 50 strömen kann, sodass sich das Gemisch aus Milch, Dampf und Luft zunächst im ersten Teilraum 50 durchmischen bzw. homogenisieren und beruhigen kann. Wenn das im ersten Teilraum 50a gestaute Gemisch aus Milch, Dampf und Luft schliesslich durch den Verbindungskanal 51 in den zweiten Teilraum 50b der Emulsionskammer 50 strömt, wird es gewöhnlich im Verbindungskanal 51 in der Längsrichtung des Verbindungskanals 51 beschleunigt, sodass das Gemisch aus Milch, Dampf und Luft den Verbindungskanal 51 in Form einer Strömung durchströmt, deren Strömungsgeschwindigkeit einen Gradienten aufweist, welcher im Wesentlichen parallel zur Strömungsgeschwindigkeit (d.h. in Längsrichtung des Verbindungskanals 51) gerichtet ist. Diese Strömung hat den Effekt, dass Milchtropfen bzw. Blasen aus Dampf und/oder Luft in der Strömung in Richtung des Gradienten der Strömungsgeschwindigkeit deformiert werden, wobei die Deformation der jeweiligen Milchtropfen bzw. Blasen aus Dampf und/oder Luft umso grösser ist, je grösser der Geschwindigkeitsgradient ist. Im vorliegenden Beispiel kann die Länge und die Querschnittsfläche des Verbindungskanals 51 so gewählt werden, dass durch den Verbindungskanal 51 strömende Milchtropfen bzw. Blasen aus Dampf und/oder Luft im Verbindungskanal 51 derart stark deformiert werden, dass einzelne Milchtropfen jeweils in mehrere kleinere Milchtropfen und einzelne Blasen aus Dampf und/oder Luft jeweils in mehrere kleinere Blasen aus Dampf und/oder Luft geteilt werden. Demzufolge gewährleistet die Aufteilung der Emulsionskammer 50 in die Teilräume 50a und 50b und die Verbindung der Teilräume 50a und 50b mittels des Verbindungskanal 51a, dass das Gemisch aus Milch, Dampf und Luft, welches über den Verbindungskanal 51 in den zweiten Teilraum 50b der Emulsionskammer 50 strömt, besonders kleine Milchtropfen und besonders kleine Blasen aus Dampf und/oder Luft umfasst und demzufolge einen besonders feinporigen Milchschaum bildet.

Wie Fig. 1 andeutet, ist im vorliegenden Beispiel - noch bevor Dampf in den Dampfeinlasskanal 11 eingeleitet wird, um Milch und Luft in den Hohlraum 10 zu saugen und den Dampf zusammen mit der angesaugten Milch und der angesaugten Luft in den Hohlraum 10 einströmen zu lassen - ein Süssungsmittel 80A in die Emulsionskammer 50 (im vorliegenden Beispiel in den ersten Teilraum 50a der Emulsionskammer 50) eingebracht worden. Das Süssungsmittel 80A liegt im vorliegenden Beispiel in Form eines Zuckerstücks vor, welches ein durchgehendes Loch 80-1 (in Fig. 1 durch zwei gestrichelte Linien angedeutet, welche die das Loch 80-1 begrenzenden Oberflächen des Zuckerstücks kennzeichnen) aufweist.

Wird nach dem Einbringen des Süssungsmittels 80A in die Emulsionskammer 50 schliesslich Dampf in den Dampfeinlasskanal 11 eingeleitet, sodass Milch und Luft in den Hohlraum 10 gesaugt wird und der Dampf zusammen mit der angesaugten Milch und der angesaugten Luft in Form eines Milch-Luft-Dampf-Gemischsin die Emulsionskammer 50 einströmt, so umströmt das jeweilige Milch-Luft-Dampf-Gemisch die Oberfläche des Süssungsmittels 80A und kann dabei auch das Loch 80-1 durchströmen, mit dem Ergebnis, dass das Süssungsmittel 80A im jeweiligen Milch-Dampf-Luft-Gemisch mindestens teilweise oder ggf. ganz aufgelöst wird, wodurch sich ein homogen gesüsster und in seiner Struktur feiner und dichter Milchschaum ausbildet, welcher anschliessend den Verbindungskanal 51 durchströmt und in den zweiten Teilraum 50b der Emulsionskammer 50 gelangt. Im unteren Bereich der in Fig. 1 gezeigten Milchschäumvorrichtung 100 ist ein Auslasskanal 70 in Form eines Auslass-Ringspaltes ausgebildet, durch welchen der automatisch erzeugte gesüsste Milchschaum anschliessend aus der Emulsionskammer 50 ausgegeben wird.

Es sei darauf hingewiesen, dass im Falle des in Fig. 1 dargestellten Süssungsmittels 80A das durchgehende Loch 80-1 nicht zwingend notwendig ist. Das in Fig. 1 dargestellte Süssungsmittel 80A kann zylindrisch, würfelförmig oder quaderförmig ausgebildet sein oder auch durch ein Zuckerstück mit einer beliebigen anderen Form ersetzt werden, beispielsweise ein kugelförmiges Zuckerstück. Jedes der vorstehend genannten Zuckerstücke kann in der Emulsionskammer 50, vorzugsweise im ersten Teilraum 50a der Emulsionskammer 50a, angeordnet werden, bevor das Milch-Luft-Dampf-Gemisch in die Emulsionskammer 50 eingeleitet wird, wobei das jeweils in die Emulsionskammer 50 eingeleitete Milch-Luft-Dampf-Gemisch das jeweilige Zuckerstück in der Emulsionskammer 50 umströmt und dabei auflöst. Das jeweilige Zuckerstück kann beispielsweise 1-3 Gramm Zucker (d.h. die in einem handelsüblichen Stück Würfelzucker enthaltene Menge Zucker) umfassen.

Um zu ermöglichen, dass das Süssungsmittel 80A im Ausführungsbeispiel gemäss Fig. 1 in die Emulsionskammer 50 eingebracht werden kann, ist die Milchschäumvorrichtung 100 so konstruiert, dass sie aus zwei Teilen - einem Oberteil 100-1 und einem Unterteil 100-2 - zusammengesetzt ist, wobei der Unterteil 100-2 relativ zum Oberteil 100-1 zwischen verschiedenen Stellungen bewegbar ist. In einer der jeweiligen Stellungen (wie in Fig. 1 dargestellt) begrenzen der Oberteil 100-1 und der Unterteil 100-2 gemeinsam die Emulsionskammer 50. Im vorliegenden Beispiel umfasst der Oberteil 100-1 u.a. den Hohlraum 100, den Dampfeinlasskanal 11, den Milcheinlasskanal 13 und den Lufteinlasskanal 12.

Der Unterteil 100-2 weist an einer dem Oberteil 100-1 zugewandten Seite eine Ausnehmung 105-2 auf, welche zumindest einen Teil der Emulsionskammer 50 bildet. Der Oberteil kann, wie Fig. 1 andeutet, an einer dem Unterteil 100-2 zugewandten Seite eine mit dem Hohlraum 10 verbundene Ausnehmung 105-1 aufweisen, sodass - wenn der Unterteil 100-2 relativ zum Oberteil 100-1 in die in Fig. 1 dargestellte Stellung gebracht ist - die Ausnehmung 105-2 zusammen mit der Ausneh-' mung 105-1 den ersten Teilraum 50a der Emulsionskammer 50 bilden. Ausgehend von der in Fig. 1 dargestellten Stellung ist der Unterteil 100-2 relativ zum Oberteil 100-1 derart in eine andere Stellung bewegbar (in Fig. 1 nicht dargestellt), in welcher der Unterteil 100-2 vom Oberteil 100-1 derart separiert ist, dass die Emulsionskammer 50 von aussen zugänglich und somit geöffnet ist, sodass das Süssungsmittel 80A (in der in Fig. 1 dargestellten Form) in die Emulsionskammer 50 (z.B. in den ersten Teilraum 50a der Emulsionskammer 50) einbringbar ist. Wenn der Unterteil 100-2 vom Oberteil 100-1 separiert ist, kann das Süssungsmittel 80A (als Ganzes, in einem Stück) beispielsweise in der Ausnehmung 105-2 im Unterteil 100-2 angeordnet werden. Anschliessend kann der Unterteil 100-2 wieder in die in Fig. 1 dargestellte Stellung gebracht werden, wobei die Emulsionskammer 50 geschlossen wird. Somit wird das Süssungsmittel 80A in der Emulsionskammer 50 zwischen dem Oberteil 100-1 und dem Unterteil 100-2 eingeschlossen, wenn der Unterteil 100-2 wieder in die Fig. 1 dargestellte Stellung gebracht wird.

Um den Unterteil 100-2 auf einfache Weise relativ zu dem Oberteil 100-1 - wie vorstehend genannt - zwischen verschiedenen Stellungen bewegen zu können, können der Unterteil 100-2 und der Oberteil 100-1 beispielsweise mittels geeigneter Kupplungselemente verbunden sein. Derartige Kupplungselemente können auf vielfältige Weise realisierst sein, beispielsweise als Schraubkupplung oder Steckkupplung. Der Unterteil 100-2 und der Oberteil 100-1 kann beispielsweise derart verbunden sein, dass der Unterteil 100-2 und der Oberteil 100-1 mittels einer Steck-Dreh-Bewegung miteinander verbunden oder getrennt werden können. Zu diesem Zweck kann - wie Fig. 1 andeutet - der Oberteil 100-1 an seinem unteren Ende mit einem Gewinde 102-1 und der Unterteil 100-2 an seinem oberen Ende mit einem Gewinde 102-2 ausgestattet sein, wobei das Gewinde 102-2 derart an das Gewinde 102-1 angepasst ist, dass durch Drehen des Unterteils 100-2 um eine Längsachse L über die Gewinde 102-1 und 102-2 eine Schraubverbindung zwischen dem Unterteil 100-2 und dem Oberteil 100-1 herstellbar bzw. eine derartige Schraubverbindung lösbar ist. In diesem Fall kann der Unterteil 100-2 durch eine manuelle Drehbewegung entriegelt und nachher axial nach unten abgezogen und somit vom Oberteil 100-1 separiert werden. Die jeweiligen Steigungen der Gewinde 102-1 und 102-2 können beispielsweise so gewählt werden, dass der Unterteil 100-2 zum Herstellen bzw. Lösen der genannten Schraubverbindung jeweils um ca. 90° um die Längsachse L gedreht werden muss.

Nach dem Separieren des Unterteils 100-2 vom Oberteil 100-1 kann der Süssstoff 80A, in vorliegenden Fall in Form des in Fig. 1 dargestellten Zuckstücks, vom Benutzer manuell in den Unterteil 100-2 bzw. in die im Unterteil 100-2 ausgebildete Ausnehmung 105-2 gelegt werden. Anschliessend kann der Unterteil durch eine axiale Hub- und Drehbewegung wieder am Oberteil 100-1 befestigt werden (entsprechend der in Fig. 1 dargestellten Anordnung des Unterteils 100-2). Im vorliegenden Fall wird die axiale Hubbewegung vorteilhafterweise automatisch mit der Drehbewegung gemacht (bedingt durch die Ausbildung der Gewinde 102-1 und 102-2).

Alternativ kann der Unterteil 100-2 mit dem Oberteil 100-1 auch mit einem Bajonett-Verschluss verbunden werden, sodass - wenn der Bajonett-Verschluss geöffnet ist - der Unterteil 100-2 vom Oberteil 100-1 separiert ist und der Süssstoff 80A wahlweise in der Ausnehmung 105-1 oder der Ausnehmung 105-2 angeordnet werden kann, bevor der Unterteil 100-2 mittels des Bajonett-Verschlusses wieder mit dem Oberteil 100-1 verbunden wird.

In einer weiteren Alternative kann der Unterteil 100-2 an einer Führung angeordnet sein, welche eine geführte Relativbewegung des Unterteils 100-2 relativ zum Oberteil 100-1 ermöglicht (jeweils zwischen der in Fig. 1 dargestellten Stellung des Unterteils 100-2 und einer anderen Stellung des Unterteils 100-2, welche Stellung es gestattet, den Süssstoff 80A wahlweise in der Ausnehmung 105-1 oder der Ausnehmung 105-2 anzuordnen. Die Führung kann beispielsweise eine Linearführung sein. Alternativ kann der Unterteil 100-2 auch an einer Schwenkachse drehbar gelagert sein, sodass der Unterteil 100-2 in einer Drehbewegung um die Schwenkachse relativ zum Oberteil 100-1 bewegbar ist. Die Schwenkachse kann dabei beispielsweise horizontal oder vertikal ausgerichtet sein.

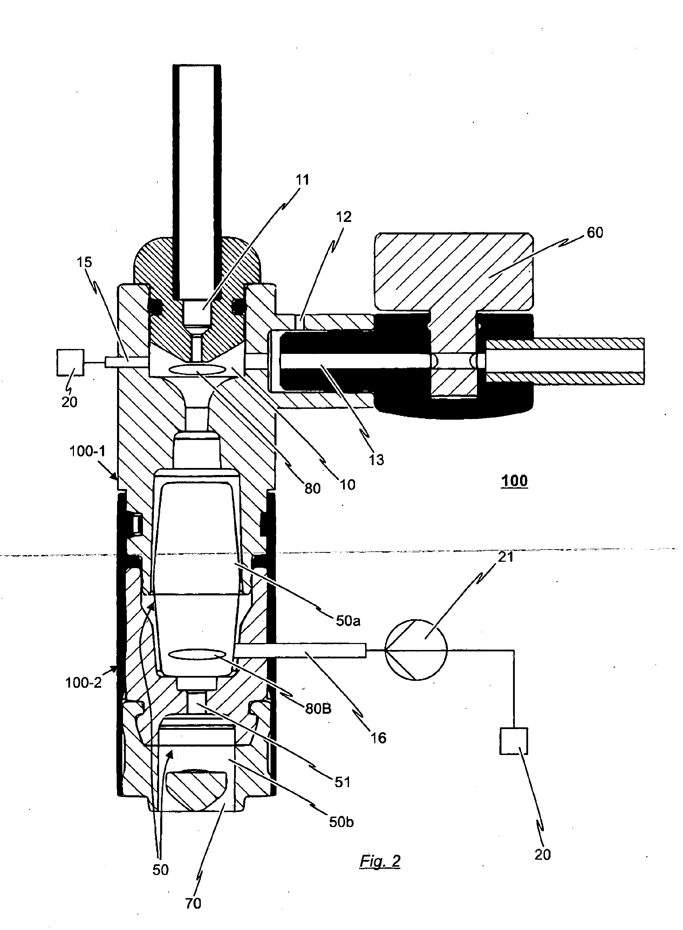

Fig. 2 zeigt eine Schnittansicht eines zweiten Ausführungsbeispiels der Milchschäumvorrichtung 100, wobei gleiche Bezugszeichen gleiche bzw. gleich wirkende Elemente wie in Fig. 1 darstellen. Zusätzlich zu dem ersten Ausführungsbeispiel aus Fig. 1 ist beim zweiten Ausführungsbeispiel gemäss Fig. 2 ein erster Süssungsmittel-Einlasskanal 15 vorhanden, welcher in den Hohlraum 10 mündet. Schematisch dargestellt ist, dass ein Vorratsbehälter 20 für flüssiges Süssungsmittel 80B mit dem anderen Ende des ersten Süssungsmittel-Einlasskanals 15 verbunden ist. Bei einem Aufschäumvorgang und dem damit verbundenen Einleiten von Dampf in den Dampfeinlasskanal 11 wird ebenfalls aufgrund des Venturi-Effektes auch in diesem ersten Süssungsmittel-Einlasskanal 15 ein Unterdruck erzeugt, was ein Einströmen des flüssigen Süssungsmittels 80B in den Hohlraum 10 durch den ersten Süssungsmittel-Einlasskanal 15 bewirkt. Es findet hier also bereits ein frühzeitiges Durchmischen der eingeleiteten bzw. angesaugten Komponenten Dampf, Milch, Luft sowie des (flüssigen) Süssungsmittels 80B statt. In ähnlicher Weise wie im ersten Ausführungsbeispiel gemäss Fig. 1 gelangt anschliessend dieses Gemisch in die Emulsionskammer 50, wobei in diesem zweiten Ausführungsbeispiel gemäss Fig. 2 an der Emulsionskammer 50 ein zusätzlicher, in diese Kammer mündender zweiter Süssungsmittel-Einlasskanal 16 vorgesehen ist. Da innerhalb der Emulsionskammer 50 kein nennenswerter Unterdruck entsteht, ist zum Transport des flüssigen Süssungsmittels 80B durch diesen zweiten Süssungsmittel-Einlasskanal 16 eine aktive Einleiteinrichtung 21 für flüssiges Süssungsmittel, zweckmässiger Weise eine Pumpe, vorgesehen, welche flüssiges Süssungsmittel 80B aus einem Vorratsbehälter 20 durch diesen zweiten Süssungsmittel-Einlasskanal 16 in das Innere der Emulsionskammer 50 einleitet. Hier findet dann analog zum ersten Ausführungsbeispiel aus Fig. 1 ein weiteres Durchmischen mit dem in die Emulsionskammer 50 eingeleiteten flüssigen Süssungsmittel 80B statt, bevor das Gemisch, d.h. der gesüsste Milchschaum mit feiner und dichter Struktur, in den Verbindungskanal 51 eingeleitet und durch den Auslasskanal 70 ausgegeben wird.

Selbstverständlich ist es auch möglich, in Anlehnung an das zweite Ausführungsbeispiel gemäss Fig. 2 jeweils nur einen der beiden Süssungsmittel-Einlasskanäle 15, 16 mit zugeordnetem Vorratsbehälter 20 für flüssiges Süssungsmittel und ggf. Einleiteinrichtung 21 vorzusehen. Dies bedeutet, dass es selbstverständlich ebenso möglich ist, nur in den Hohlraum 10 bzw. nur in die Emulsionskammer 50 Süssungsmittel 80 einzuleiten.

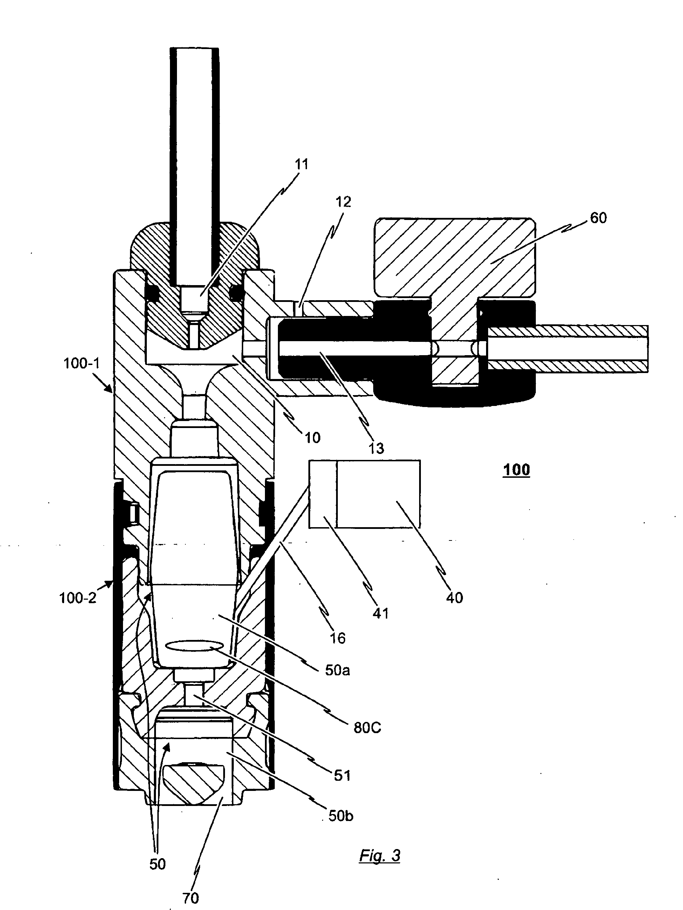

In dem in Fig. 3 gezeigten dritten Ausführungsbeispiel wird durch den dort ebenfalls vorgesehenen zweiten Süssungsmittel-Einlasskanal 16 im Unterschied zum zweiten Ausführungsbeispiel gemäss Fig. 2 kein flüssiges, sondern festes Süssungsmittel 80C ins Innere der Emulsionskammer 50 eingeleitet. Hierzu ist statt des Vorratsbehälters 20 für flüssiges Süssungsmittel ein Vorratsbehälter 40 für festes, ggf. pulverförmiges Süssungsmittel 80C vorgesehen, welches mittels einer Einleiteinrichtung 41 ins Innere der Emulsionskammer 50 eingeleitet werden kann, wo analog zu den beiden vorgehend beschriebenen Ausführungsbeispielen eine Durchmischung mit dem sich ggf. auflösenden Süssungsmittel 80C stattfindet. Ebenso wie die Einleiteinrichtung 21 für flüssiges Süssungsmittel gemäss dem in Fig. 2 dargestellten zweiten Ausführungsbeispiel kann die Einleiteinrichtung 41 für festes, ggf. pulverförmiges Süssungsmittel 80C gemäss dem in Fig. 3 dargestellten dritten Ausführungsbeispiel manuell bedienbar oder auch automatisch wirkend sein. Insbesondere in einer automatischen Ausführung ist ein automatisches Zudosieren einer vorgegebenen Menge an Süssungsmittel auf einfache Weise möglich.

## Patentansprüche

1. Verfahren zum automatischen Erzeugen von Milchschaum in einer Milchschäumvorrichtung (100), wobei die Milchschäumvorrichtung (100) wenigstens einen Hohlraum (10), einen Dampfeinlasskanal (11) zum Einleiten von Dampf in den Hohlraum (10), einen Milcheinlasskanal (13) zum Einleiten von Milch in den Hohlraum (10), einen Lufteinlasskanal (12) zum Einleiten von Luft in den Hohlraum (10), einen Auslasskanal (70) zur Abgabe von Milchschaum aus der Milchschäumvorrichtung (100) und eine zwischen dem Hohlraum (10) und dem Auslasskanal (70) angeordnete Emulsionskammer (50) aufweist und
wobei der Dampfeinlasskanal (11), der Milcheinlasskanal (13), Lufteinlasskanal (12), die Emulsionskammer (50) und der Auslasskanal (70) jeweils mit dem Hohlraum (10) direkt oder indirekt verbunden sind und durch Einleiten von Dampf in den Hohlraum (10) ein Milch-Luft-Dampfgemisch im Hohlraum (10) erzeugbar und in die Emulsionskammer (50) einleitbar ist,
wobei das Verfahren die folgenden Verfahrensschritte aufweist:
Einleiten von Dampf in den Dampfeinlasskanal (11), um Milch und Luft in den Hohlraum (10) strömen zu lassen und zu einem Milch-Luft-Dampf-Gemisch zu verwirbeln;
Ausgabe des Milch-Luft-Dampf-Gemischs aus der Emulsionskammer (50) in den Auslasskanal (70);
**dadurch gekennzeichnet, dass**
das Verfahren weiterhin den folgenden Verfahrensschritt aufweist:
Einbringen eines in fester Form vorliegenden Süssungsmittels (80A) in die Emulsionskammer (50),
wobei das Süssungsmittel (80A) als ein zu einem Block geformter Körper ausgebildet ist und dieser Körper in der Emulsionskammer (50) angeordnet wird, bevor das Einleiten von Dampf in den Dampfeinlasskanal (11) erfolgt, sodass das Süssungsmittel (80A) von dem Milch-Luft-Dampf-Gemisch umströmt und in dem Milch-Luft-Dampf-Gemisch aufgelöst wird.

2. Verfahren nach Anspruch 1,
wobei das Süssungsmittel (80A) als ein Block , welcher die Form eines Zylinders, eines Würfels, eines Quaders oder einer Kugel oder eine andere Form aufweist, oder als Würfelzucker ausgebildet ist.

3. Verfahren nach einem der 1 oder 2,
wobei die Milchschäumvorrichtung (100) einen Oberteil (100-1) und einen Unterteil (100-2) umfasst und der Unterteil (100-2) derart angeordnet ist, dass er relativ zum Oberteil (100-1) zwischen einer Stellung und einer anderen Stellung bewegbar ist, wobei im Unterteil (100-2) eine Ausnehmung (105-2) ausgebildet ist, welche - wenn der Unterteil (100-1) relativ zum Oberteil in die eine Stellung gebracht ist - einen von dem Milch-Luft-Dampf-Gemisch durchströmbaren Bereich der Emulsionskammer (50) bildet, und wobei der Unterteil (100-2) - wenn der Unterteil (100-2) in die andere Stellung gebracht ist, von dem Oberteil (100-1) derart separiert ist, dass die Ausnehmung (105-2) zugänglich ist und das Süssungsmittel (80A) als Ganzes in der Ausnehmung (105-2) angeordnet werden kann,
wobei das Verfahren die Verfahrenschritte umfasst:
vor dem Verfahrensschritt "Einleiten von Dampf in den Dampfeinlasskanal" wird der Unterteil (100-2) in die andere Stellung bewegt, anschliessend wird das Süssungsmittel (80A) in der Ausnehmung (105-2) angeordnet und der Unterteil (100-2) in die eine Stellung bewegt.

## Claims

1. A method for automatically producing milk froth in a milk-frothing apparatus (100), wherein the milk-frothing apparatus (100) encompasses at least one hollow space (10), a steam-inlet channel (11) for introducing steam into the hollow space (10), a milk-inlet channel (13) for introducing milk into the hollow space (10), an air-inlet channel (12) for introducing air into the hollow space (10), an outlet channel (70) for discharging milk froth from the milk-frothing apparatus (100) and an emulsion chamber (50), which is arranged between the hollow space (10) and the outlet channel (70), and
wherein the steam-inlet channel (11), the milk-inlet channel (13), air-inlet channel (12), the emulsion chamber (50) and the outlet channel (70) are in each case directly or indirectly connected to the hollow space (10) and a milk-air-steam mixture can be produced in the hollow space (10) by introducing steam into the hollow space (10) and can be introduced into the emulsion chamber,
wherein the method encompasses the following method steps:
introducing steam into the steam-inlet channel (11), so as to let milk and air flow into the hollow space (10) and to swirl them to form a milk-air-steam mixture;
outputting the milk-air-steam mixture from the emulsion chamber (50) into the outlet channel (70);
**characterized in that**
the method furthermore encompasses the following method step:
introducing a sweetening means (80A), which is present in solid form, into the emulsion chamber (50),
wherein the sweetening means (80A) is embodied as a body, which is shaped to form a block, and this body is arranged in the emulsion chamber (50) before the introduction of steam into the steam-inlet channel (11) takes place, so that the milk-air-steam mixture flows around the sweetening means (80A) and the sweetening means is dissolved in the milk-air-steam mixture.

2. The method according to claim 1,
wherein the sweetening means (80A) is embodied as a block, which encompasses the shape of a cylinder, of a cube, of a cuboid or of a ball or another shape, or as sugar cube.

3. The method according to one of claims 1 or 2,
wherein the milk-frothing apparatus (100) comprises an upper part (100-1) and a lower part (100-2) and the lower part (100-2) is arranged such that it can be moved relative to the upper part (100-1) between one position and another position, wherein a recess (105-2), which - when the lower part (100-1) is brought into the one position relative to the upper part - forms an area of the emulsion chamber (50) through which the milk-air-steam mixture can flow, is embodied in the lower part (100-2), and wherein the lower part (100-2) - when the lower part (100-2) is brought into the other position - is separated from the upper part (100-1) such that the recess (105-2) can be accessed and the sweetening means (80A) can be arranged in the recess (105-2) as a whole,
wherein the method comprises the method steps:
the lower part (100-2) is moved into the other position prior to the method step "introducing steam into the steam-inlet channel", the sweetening means (80A) is subsequently arranged in the recess (105-2) and the lower part (100-2) is moved into the one position.

## Revendications

1. Procédé de production automatique de mousse de lait dans un dispositif mousseur de lait (100), le dispositif mousseur de lait (100) présentant au moins une cavité (10), un canal d'entrée de vapeur (11) pour introduire de la vapeur dans la cavité (10), un canal d'entrée de lait (13) pour introduire du lait dans la cavité (10), un canal d'entrée d'air (12) pour introduire de l'air dans la cavité (10), un canal de sortie (70) pour délivrer de la mousse de lait hors du dispositif mousseur de lait (100) et une chambre d'émulsion (50) disposée entre la cavité (10) et le canal de sortie (70), et
le canal d'entrée de vapeur (11), le canal d'entrée de lait (13), le canal d'entrée d'air (12), la chambre d'émulsion (50) et le canal de sortie (70) étant respectivement reliés directement ou indirectement à la cavité (10) et un mélange de lait et d'air et de vapeur pouvant être produit dans la cavité (10) par introduction de vapeur dans la cavité (10) et pouvant être introduit dans la chambre d'émulsion (50),
ce procédé présentant les étapes opératoires suivantes:
introduction de vapeur dans le canal d'entrée de vapeur (11) pour faire affluer du lait et de l'air dans la cavité (10) et le faire tourbillonner pour former un mélange de lait et d'air et de vapeur;
déversement du mélange de lait et d'air et de vapeur depuis la chambre d'émulsion (50) vers le canal de sortie (70);
**caractérisé en ce que**
ce procédé présente en outre l'étape opératoire suivante:
introduction d'un produit sucrant (80A) présent sous forme solide dans la chambre d'émulsion (50),
le produit sucrant (80A) se présentant sous la forme d'un corps moulé en un bloc et ce corps étant disposé dans la chambre d'émulsion (50) avant que l'introduction de vapeur dans le canal d'entrée de vapeur (11) n'ait lieu, de sorte que le produit sucrant (80A) est entouré d'un flux de mélange de lait et d'air et de vapeur et se dissout dans le mélange de lait et d'air et de vapeur.

2. Procédé selon la revendication 1,
dans lequel le produit sucrant (80A) se présente sous forme d'un bloc qui a la forme d'un cylindre, d'un cube, d'un carré ou d'une boule ou une autre forme, ou d'un morceau de sucre.

3. Procédé selon une des revendications 1 ou 2,
dans lequel le dispositif mousseur de lait (100) comprend une partie supérieure (100-1) et une partie inférieure (100-2) et que la partie inférieure (100-2) est disposée de manière à ce qu'il soit mobile entre une position et une autre position par rapport à la partie supérieure (100-1), étant pratiqué dans la partie inférieure (100-2) un évidement (105-2) qui - lorsque la partie inférieure (100-1) est mise dans une des positions par rapport à la partie supérieure - constitue une zone de la chambre d'émulsion (50) où peut passer le mélange de lait et d'air et de vapeur, et la partie inférieure (100-2) - lorsque la partie inférieure (100-2) est mise dans l'autre position, est séparée de la partie supérieure (100-1) de manière à ce que l'évidement (105-2) soit accessible et que le produit sucrant (80A) puisse être disposé en totalité dans l'évidement (105-2),
ce procédé comprenant les étapes opératoires suivantes:
avant l'étape opératoire «Introduction de vapeur dans le canal d'entrée de vapeur», la partie inférieure (100-2) est mise dans l'autre position puis le produit sucrant (80A) est disposé dans l'évidement (105-2) et la partie inférieure (100-2) est mise dans la première position.
